# EUROPÄISCHE PATENTSCHRIFT

(11) **EP 1 718 490 B1**
(45) Veröffentlichungstag und Bekanntmachung des Hinweises auf die Patenterteilung: **01.04.2009**
(21) Anmeldenummer: 05701413.6
(22) Anmeldetag: 16.02.2005
(51) Int. Cl.: B60K 25/00

(54) **VERFAHREN ZUM BETRIEB EINER MIT EINEM ANTRIEBSMOTOR GEKOPPELTEN WEGZAPFWELLE**
METHOD FOR THE OPERATION OF A TRAVELING POWER TAKE-OFF SHAFT COUPLED TO A DRIVING MOTOR
PROCEDE POUR FAIRE FONCTIONNER UN ARBRE DE PRISE DE FORCE COUPLE A UN MOTEUR D'ENTRAINEMENT

(30) Priorität: 26.02.2004 DE 102004009260
(43) Veröffentlichungstag der Anmeldung: 08.11.2006
(73) Patentinhaber: ZF Friedrichshafen AG, 88038 Friedrichshafen (DE)
(72) Erfinder: PREBECK, Stefan, A-4400 Steyr (AT); SCHACHNER, Kurt, A-3352 St. Peter/Au (AT); PILAT, Günter, A-4400 St. Ulrich/Steyr (AT)
(74) Vertreter: Zietlow, Karl-Peter
(86) Internationale Anmeldenummer: PCT/EP2005/001527
(87) Internationale Veröffentlichungsnummer: WO 2005/082664

(56) Entgegenhaltungen:
- EP-A- 1 293 113
- EP-A- 1 338 458
- DE-A1- 10 010 819
- US-A- 4 191 270
- US-A- 6 138 069

## Beschreibung

Die vorliegende Erfindung betrifft ein Verfahren zum Betrieb einer mit einem Antriebsmotor gekoppelten Wegzapfwelle gemäß dem Oberbegriff des Patentanspruchs 1.

Wegzapfwellen werden nach dem Stand der Technik bei landwirtschaftlichen Fahrzeugen, beispielsweise Schleppern mit Triebachsanhängem, aufgesattelten Düngestreuern, Drillmaschinen eingesetzt; hierbei wird die Drehzahl der Zapfwelle mit der Fahrgeschwindigkeit des Schleppers verändert, so dass Drehzahl der Zapfwelle und Fahrgeschwindigkeit des Schleppers immer in einem gleichen Verhältnis zueinander stehen.

Üblicherweise werden derartige Zapfwellen über feste Übersetzungsstufen direkt mit der Motordrehzahl gekoppelt. Für einige Anwendungen in der Landtechnik benötigt man, unabhängig von der Getriebeübersetzung ein festes Verhältnis zwischen Rad- und Zapfwellen Drehzahl, beispielsweise für den Antrieb eines getriebenen Ladewagens.

Nach dem Stand der Technik werden Wegzapfwellen mittels einer direkten mechanischen Koppelung mit dem Abtrieb verbunden, was in einem großen mechanischen Aufwand resultiert. Hierbei wird - unabhängig von der Motordrehzahl - ein festes Übersetzungsverhältnis zwischen Raddrehzahl und Zapfwellendrehzahl erzielt.

Solch eine Wegzapfwelle nach dem Oberbegriff des Anspruch 1 ist aus der US 6138069 bekannt.

Im Rahmen der EP 0 511 480 B1 ist ein Wechselgetriebe für den Antrieb einer Zapfwelle eines Ackerschleppers beschrieben, welches eine Eingangswelle mit mindestens zwei treibenden Zahnrädern, eine Ausgangswelle mit mindestens zwei losen Zahnrädern und einer dazwischen angeordnetenschaltbaren Muffenkupplung, wobei die losen Zahnräder mit den treibenden Zahnrädern ständig kämmen und lose auf der Eingangswelle gelagert sind. Zwischen den treibenden Zahnrädern ist ferner eine hydraulisch betätigbare Lamellenkupplung angeordnet; des weiteren ist mindestens ein treibendes Zahnrad auf je einer Seite der Lamellenkupplung fest mit deren Gehäuse verbunden.

Die EP 0 967 107 B1 der Anmelderin beschreibt ein Verfahren zum Steuern einer Antriebseinheit mit einem stufenlos-verstellbarem Getriebe, wobei bei Einsatz der Antriebseinheit in einem Schlepper mit Zapfwelle als Fahrhebel ein Fahrpedal und ein Handgas vorgesehen sind. Bei aktiviertem Handgas bestimmt dessen Stellung die Ansteuergröße für den Antriebsmotor; die Stellung des Fahrpedals bestimmt eine Verstellung der Getriebeübersetzung, so dass über das Fahrpedal die Fahrgeschwindigkeit und über das Handgas Fahrgeschwindigkeit und Zapfwellendrehzahl einstellbar sind.

Der vorliegenden Erfindung liegt die Aufgabe zugrunde, ein Verfahren zum Betrieb einer mit einem Antriebsmotor gekoppelten Wegzapfwelle anzugeben, welches eine Koppelung von Rad- und Zapfwellendrehzahl auf elektronischem Weg ermöglicht, wobei unterschiedliche Verhältnisse zwischen Rad- und Zapfwellendrehzahl einstellbar sein sollen.

Diese Aufgabe wird durch die Merkmale des Patentanspruchs 1 gelöst. Weitere Varianten und Vorteile gehen aus den Unteransprüchen hervor.

Demnach wird ein Verfahren vorgeschlagen, im Rahmen dessen die Zapfwellendrehzahl über die Motordrehzahl der Radgeschwindigkeit elektronisch angepasst wird. Dies kann beispielsweise durch Verwendung eines Sensors, welcher die Radgeschwindigkeit erfaßt, oder anderer Drehzahlsensoren im Untersetzungsgetriebe oder auch anderer Geschwindigkeitssensoren, welche nicht die Raddehzahl, sondern die Fahrgeschwindigkeit, erfassen, erfolgen. Hierbei ist vorgesehen, dass die Elektronik bei Erreichen der oberen oder unteren Grenzdrehzahl des Motors in die nächst höhere bzw. nächst niedrigere Zapfwellenstufe schaltet. Beispielsweise mit den im Markt üblichen Stufen von 540, 750 und 1000 rpm kann in vorteilhafter Weise ein Wegzapfwellenbetrieb für Fahrzeuggeschwindigkeiten von 2,5 bis 10 km/h realisiert werden (Zapfwellendrehzahl / Raddrehzahl 40/1).

Für den Fall, dass die Wegzapfwelle zum Antreiben eines angetriebenen Anhängers verwendet wird, muss das System in der Lage sein, von der Geschwindigkeit Null starten zu können. Gemäß der Erfindung wird vorgeschlagen, den Drehzahlunterschied zwischen der Drehzahl bei Geschwindigkeit Null (bis die untere Grenzdrehzahl des Motors erreicht wird) und der unteren Grenzdrehzahl des Motors über eine mit Proportionalventil oder durch Stellmotoren angesteuerte oder geregelte, verstärkte schleifende Zapfwellenkupplung auszugleichen.

Bei angetriebenen Anhängern kann erfindungsgemäß mittels einer Schlupferkennung über eine Auswertung in der Elektronik ein optimales Drehzahlverhältnis zwischen Zugfahrzeug und Anhänger erreicht werden; dies ist insbesondere in steilem Gelände zum Gewährleisten der Sicherheit relevant.

Gemäß der Erfindung kann, bei speziellen Anwendungen das Verhältnis Fahrgeschwindigkeit zu Zapfwellendrehzahl während der Fahrt durch manuellen Eingriff den Erfordernissen angepasst werden.

## Patentansprüche

1. Verfahren zum Betrieb einer mit einem Antriebsmotor gekoppelten Wegzapfwelle, bei dem eine Rad- oder Fahrzeuggeschwindigkeit ermittelt und die Zapfwellendrehzahl über die Motordrehzahl elektronisch der Radgeschwindigkeit angepasst wird, **dadurch gekennzeichnet, daß** bei Erreichen der oberen oder unteren Grenzdrehzahl des Antriebsmotors in die nächst höhere bzw. nächst niedrigere Zapfwellenstufe geschaltet wird.

2. Verfahren nach Anspruch 1, **dadurch gekennzeichnet, dass** für den Fall, dass von der Geschwindigkeit Null gestartet wird, der Drehzahlunterschied zwischen der Drehzahl bei Geschwindigkeit Null und der unteren Grenzdrehzahl des Motors, über eine verstärkte schleifende Zapfwellenkupplung ausgeglichen wird.

3. Verfahren nach Anspruch 1 oder 2, **dadurch gekennzeichnet, dass** bei angetriebenen Anhängern mittels einer Schlupferkennung über eine Auswertung in der Elektronik ein optimales Drehzahlverhältnis zwischen Zugfahrzeug und Anhänger erreicht wird.

4. Verfahren nach einem der vorangehenden Ansprüche, **dadurch gekennzeichnet, dass** das Verhältnis Fahrgeschwindigkeit zu Zapfwellendrehzahl während der Fahrt durch manuellen Eingriff den Erfordernissen anpassbar ist.

## Claims

1. Method for operating a driving-engine-coupled power take-off shaft, with a wheel or vehicle speed being determined and the PTO shaft speed being electronically adjusted to the wheel speed via the engine speed, **characterized in that** the next higher or next lower PTO stage is engaged when the upper or lower limit speed of the driving engine is reached.

2. Method according to claim 1, **characterized in that** if the starting point is zero speed, the speed differential between the speed at zero speed and the lower limit speed of the engine is equalized by a reinforced slipping PTO clutch.

3. Method according to claim 1 or 2, **characterized in that** an optimum rpm ratio between tractor and trailer is achieved for driven trailers through slip detection via analysis in the electronic system.

4. Method according to one of the preceding claims, **characterized in that** the relationship between driving speed and PTO shaft speed can be adjusted during driving to the requirem

## Revendications

1. Procédé d'entraînement d'une prise de force dépendante de l'avancement couplée à un moteur d'entraînement, dans lequel est déterminée une vitesse de roue ou une vitesse de véhicule et le régime de la prise de force est adapté par l'intermédiaire du régime moteur électroniquement à la vitesse de roue, **caractérisé en ce que** au moment où le régime limite supérieur ou inférieur du moteur d'entraînement est atteint, est enclenché l'étage immédiatement supérieur ou immédiatement inférieur de la prise de force.

2. Procédé selon la revendication 1, **caractérisé en ce que** en cas de démarrage avec la vitesse zéro, la différence de régime entre le régime à la vitesse zéro et le régime limite inférieur du moteur est compensée par un embrayage de prise de force renforcé et patinant.

3. Procédé selon la revendication 1 ou 2, **caractérisé en ce que** pour des remorques entraînés il est possible d'obtenir un rapport de régime optimal entre le tracteur et la remorque à l'aide d'une reconnaissance de patinage par l'intermédiaire d'une évaluation dans le boîtier électronique.

4. Procédé selon une des revendications précédentes, **caractérisé en ce que** le rapport entre la vitesse de déplacement et le régime de la prise de force peut être adapté pendant la marche aux exigences par intervention manuelle.
